# EUROPÄISCHE PATENTSCHRIFT

(11) **EP 2 226 496 B1**
(45) Veröffentlichungstag und Bekanntmachung des Hinweises auf die Patenterteilung: **05.08.2015**
(21) Anmeldenummer: 10154384.1
(22) Anmeldetag: 23.02.2010
(51) Int. Cl.: F03D 1/00, F03D 11/00

(54) **Handhabungsvorrichtung für Rotorblattlager**
Handling device for rotor blade bearing
Dispositif de manipulation pour cahier de feuilles de rotor

(30) Priorität: 06.03.2009 DE 102009011478
(43) Veröffentlichungstag der Anmeldung: 08.09.2010
(73) Patentinhaber: Senvion SE, 22297 Hamburg (DE)
(72) Erfinder: Kaufmann, Sven, 06268 Obhausen (DE); Fuglsang-Petersen, Jochen, 24613 Aukrug (DE)
(74) Vertreter: Grebner, Christian Georg Rudolf

(56) Entgegenhaltungen:
- EP-A2- 1 997 681
- WO-A1-2008/000262
- WO-A2-2009/080047
- US-A1- 2007 189 895

## Beschreibung

Die Erfindung betrifft eine Handhabungsvorrichtung für flache Bauteile einer Windenergieanlage, insbesondere für Rotorblattlager und/oder Nabeneinbauten, wobei die Höhe der Bauteile kleiner ist als ihre Breite oder Länge oder Durchmesser. Ferner betrifft die Erfindung eine Verwendung einer derartigen Handhabungsvorrichtung.

Im Stand der Technik ist bekannt, dass Windenergieanlagen mit Rotorblattverstellsystemen zur Verstellung der drehbar gelagerten Rotorblatter ausgebildet sind. Hierbei wird ein Rotorblatt mit einem Rotorblattlager drehbar an einer Rotornabe befestigt. Das Rotorblattverstellsystem verfügt dabei über mindestens einen Blattverstellantrieb mit einem Antriebsritzel, einer Getriebeeinheit und einem elektrischen oder hydraulischen Antriebsmotor. Hierbei kämmt das Antriebsritzel mit dem innen oder außen verzahnten Rotorblattlager. In EP-A-1 997 681 ist eine Halterungsvorrichtung zum Befestigen gebogener Rotorblätter einer Windkraftanlage zur Lagerung und zum Transport wenigstens eines Rotorblatts offenbart. Hierbei ist ein Endrahmen zur Verbindung mit einem Fuß eines ersten Rotorblatts vorgesehen, wobei ferner die Halterungsvorrichtung weiterhin einen Verbindungsrahmen aufweist, wobei ein Ende des Verbindungsrahmens drehbar mit dem Endrahmen verbunden ist.

Darüber hinaus sind in US-A-2007/0189895 ein Verfahren und ein System zum Transport von Windenergiekomponenten offenbart. Hierbei sind auf Eisenbahnwaggons in vorbestimmten Abständen zwei Rahmen zur Aufnahme von diesen Komponenten angeordnet.

Ferner sind in WO-A-2008/000262 eine Hubeinrichtung zur Handhabung einer Windturbinenkomponente sowie ein Verfahren zur Handhabung einer Windturbinenkomponente beschrieben. Hierbei weist die Hebeausrüstung ein Basisgestell mit wenigstens einem Befestigungsbereich und wenigstens zwei Befestigungspunkten für die Windturbinenkomponente auf. Einer der Befestigungspunkte ist einstellbar angebracht, um relativ zum Basisgestell eine exzentrische Bewegung auszuführen.

Außerdem offenbart WO-A-2009/080047 ein Verfahren zur Handhabung und/oder Wartung von Bestandteilen einer Windkraftanlage und eine Greifvorrichtung zur Durchführung des Verfahrens.

Beispielsweise ist in DE 10 2004 023 773 B3 eine Windenergieanlage mit einem Rotorblattverstellsystem offenbart. Dabei verfügt die Windenergieanlage über eine Rotornabe, wobei über ein Rotorblattlager um eine Rotorblattverstellachse ein Rotorblatt drehbar mit der Rotornabe gekoppelt ist.

Bei der Fertigung von Rotornaben werden nach der Herstellung der Rotornabe und der Herstellung von den Rotorblattlagern die Rotorblattlager auf den Blattflanschen der Rotornabe montiert. Hierbei ist die Handhabung der Rotorblattlager sehr schwierig, da die Rotorblattlager großvolumige Bauteile sind, die beispielsweise einen Durchmesser von 1,5 m und mehr sowie eine Masse von mehreren Tonnen aufweisen.

Ausgehend von diesem Stand der Technik ist es Aufgabe der Erfindung, die Handhabung von großvolumigen, flachen Bauteilen von Windenergieanlagen, insbesondere von Rotorblattlagern und/oder Nabeneinbauten, bei der Vormontage von Bauteilen zu vereinfachen bzw. zu verbessern.

Gelöst wird diese Aufgabe durch eine Handhabungsvorrichtung für großvolumige flache Bauteile einer Windenergieanlage, insbesondere für Rotorblattlager und/oder Nabeneinbauten, wobei die Höhe der Bauteile kleiner ist als ihre Breite oder Länge oder Durchmesser, wobei die Handhabungsvorrichtung einen, vorzugsweise starren, Tragrahmen aufweist und an dem Tragrahmen ein um eine Schwenkachse verschwenkbarer Schwenkrahmen vorgesehen ist, wobei der Schwenkrahmen mit dem Bauteil, vorzugsweise Rotorblattlager, verbindbar oder verbunden ist, wobei der Schwenkrahmen einen zwischen den Längsseiten des Tragrahmens angeordneten Querträger aufweist und am Querträger des Schwenkrahmens seitlich wenigstens ein oder mehrere Haltearme vorgesehen sind, wobei der Schwenkrahmen und/oder die Haltearme mit Befestigungsvorrichtungen für zu verschwenkende oder verschwenkte Bauteile versehen sind.

Für die Montage von Rotorblattlagern an einer Rotornabe werden gemäß dem Stand der Technik die Rotorblattlager bzw. Großwälzlager mit Hilfe von Ketten oder dergleichen von einer Lieferpalette abgenommen und zur Montage an einer Rotornabe gehoben und/oder gedreht. Durch das einseitige Heben und Drehen des Rotorblattlagers für die Montage mit einer Schraube und Lasche können die hochwertig gefertigten Rotorblattlager mechanisch überbeansprucht werden, was bei einem einseitigen Heben des Lagers zu einer Unrundheit führen kann, wodurch das Rotorblattlager entsprechend Schaden nehmen kann. Außerdem besteht bei einem Drehen am Boden die Gefahr, dass die empfindliche Verzahnung am Rotorblattlager beschädigt wird.

Demgegenüber beruht die Erfindung auf dem Gedanken, durch die Handhabungsvorrichtung bzw. ein Traggestell oder dergleichen für großvolumige, vorzugsweise flache, Bauteile, insbesondere für Rotorblattlager und/oder Nabeneinbauten, bereitzustellen, wodurch die Handhabung der Bauteile, insbesondere der Rotorblattlager, verbessert wird. Beispielsweise wird der Schwenkrahmen mit dem Rotorblattlager an den dafür vorgesehenen Transportgewinden des Lagers verbunden und anschließend das Rotorblattlager in eine entsprechende Montageposition mittels des Schwenkrahmens gedreht und/oder positioniert. Hierbei wird das horizontal liegende Rotorblattlager mit dem Schwenkrahmen der Handhabungsvorrichtung verbunden, wobei vorzugsweise der Schwerpunkt des Rotorblattlagers in der Schwenkachse des Schwenkrahmens liegt. Anschließend wird die Handhabungsvorrichtung zusammen mit dem Rotorblattlager angehoben, so dass das Rotorblattlager um die Schwenkachse des Schwenkrahmens bzw. um den Schwerpunkt des Rotorblattlagers geschwenkt oder gedreht wird.

Ein weiterer Vorteil der Handhabungsvorrichtung besteht darin, dass flache Bauteile, wie z.B. Rotorblattlager oder Nabeneinbauten, gehoben werden und um eine Achse gedreht werden können. Hierbei wird vorteilhafterweise das zu hebende Bauteil bzw. Rotorblattlager in der Handhabungsvorrichtung bzw. in dem Traggestell im Schwerpunkt gelagert, wodurch sich eine stabile Lagerung des Bauteils ergibt. Darüber hinaus ist der Aufwand zum Drehen des Bauteils dadurch gering. Als flache Bauteile werden Bauteile bezeichnet, deren Höhe deutlich kleiner ist, als ihre Breite oder Länge oder ihr Durchmesser.

Nabeneinbauten sind insbesondere auch Komponenten für die Rotorblattverstellung, z.B. Pitch-Boxen, die elektrische Komponenten beinhalten, oder auch Wartungsplattformen, die bei großen Windenergieanlagen im Bereich der Rotorblattlager montiert werden.

Bevorzugterweise wird das zu hebende Bauteil bzw. Rotorblattlager an mindestens zwei Punkten mit der Handhabungsvorrichtung bzw. mit dem Schwenkrahmen verbunden, wobei das zu hebende und/oder zu drehende Bauteil bzw. Rotorblattlager formschlüssig oder kraftschlüssig mit der Vorrichtung bzw. dem Schwenkrahmen verbunden sein kann.

Darüber hinaus ist in einer Weiterbildung vorgesehen, dass der Tragrahmen eine, vorzugsweise umgekehrte, U-Form oder Bügelform aufweist. Hierbei ist der Tragrahmen, bevorzugterweise an seinen Enden, mit dem Schwenkrahmen verbunden, wobei der Schwenkrahmen gegenüber dem Tragrahmen an den Verbindungspunkten schwenkbar bzw. drehbar gelagert ist.

Hierzu ist in einer Ausgestaltung vorgesehen, dass der Tragrahmen, vorzugsweise auf seiner Oberseite, wenigstens eine oder mehrere Befestigungsvorrichtungen für Anschlagmittel, vorzugsweise für Anschlagmittel eines Krans oder eines Hebezeugs, aufweist. Durch das Anschlagmittel wird beispielsweise eine Verbindung zwischen einem Tragmittel und dem als Handhabungsvorrichtung ausgebildeten Lastaufnahmemittel hergestellt.

Dadurch, dass der Tragrahmen U-förmig oder dergleichen ausgebildet ist, ist es weiterhin vorteilhaft, wenn an den, vorzugsweise senkrechten, Längsseiten des Tragrahmens der Schwenkrahmen, vorzugsweise im unteren Bereich des Tragrahmens bzw. seiner Längsseiten, schwenkbar gelagert ist.

Ferner ist es vorteilhaft, wenn der Schwenkrahmen eine U-Form oder Bügelform aufweist. Insbesondere weist der Schwenkrahmen einen zwischen den Längsseiten des Tragrahmens angeordneten Querträger auf, wobei der Querträger des Schwenkrahmens parallel zum Querträger des Tragrahmens angeordnet ist. Darüber hinaus ist der Querträger des Schwenkrahmens außerhalb der Schwenkachse des Schwenkrahmens, vorzugsweise parallel zur Schwenkachse, ausgerichtet bzw. angeordnet.

Dadurch, dass am Querträger des Schwenkrahmens seitlich wenigstens ein oder mehrere Haltearme vorgesehen sind, wird das aufzunehmende bzw. zu drehende Bauteil bzw. Rotorblattlager sicher und stabil in der Handhabungsvorrichtung gehalten.

Darüber hinaus zeichnet sich eine bevorzugte Ausführungsform der Handhabungsvorrichtung dadurch aus, dass die Befestigungsvorrichtungen in den Randbereichen des Schwenkrahmens, insbesondere in den Randbereichen des Querträgers des Schwenkrahmens, und/oder in den Randbereichen der Haltearme vorgesehen sind.

Dazu ist in einer vorteilhaften Ausgestaltung der Handhabungsvorrichtung vorgesehen, dass ein zu verschwenkendes oder verschwenktes Bauteil mittels drei oder vier Befestigungsschrauben an der Handhabungsvorrichtung, insbesondere am Schwenkrahmen und/oder an den Haltearmen der Handhabungsvorrichtung, befestigbar oder befestigt ist, wobei insbesondere die Befestigungsschrauben gleichmäßig, vorzugsweise über den Umfang des zu verschwenkenden oder verschwenkten Bauteils, verteilt angeordnet sind. Durch die Verwendung von drei oder vier Befestigungsschrauben wird eine zuverlässige Verbindung zwischen dem Bauteil, beispielsweise in Form eines Rotorblattlagers, und der dafür vorgesehenen Handhabungsvorrichtung erreicht, wobei nach einer entsprechenden Positionierung des Bauteils die Verbindung durch Lösen der Befestigungsschrauben schnell gelöst wird.

Des Weiteren ist es gemäß einer Weiterbildung der Handhabungsvorrichtung günstig, dass der Schwenkrahmen und/oder die Haltearme Aufnahmen für verschiedene Durchmesser von Befestigungsschrauben für ein zu verschwenkendes oder verschwenktes Bauteil aufweisen, so dass das Bauteil mittels Befestigungsschrauben an der Handhabungsvorrichtung lösbar befestigt ist oder wird, wobei für Bauteile mit unterschiedlichen Durchmessern oder dergleichen Befestigungsschrauben mit unterschiedlichen Schraubendurchmessern jeweils verwendet werden.

Ferner ist es in einer Ausführungsform der Handhabungsvorrichtung bevorzugt, wenn die Befestigungsschrauben zur Befestigung von Bauteilen, vorzugsweise von Bauteilen mit verschiedenen Durchmessern, am Schwenkrahmen und/oder an den Haltearmen der Handhabungsvorrichtung jeweils auf unterschiedlichen Lochkreisdurchmessern anordbar oder angeordnet sind. Dadurch ist es möglich, dass die Handhabungsvorrichtung aufgrund der verschiedenen Lochkreisdurchmesser für verschiedene Rotorblattlagertypen oder -lagergrößen mit verschiedenen Rotorblattlagerdurchmessern verwendet werden kann.

Um eine Drehung eines am Schwenkrahmen angeordneten bzw. befestigten Rotorblattlagers zu ermöglichen, wird weiterhin vorgeschlagen, dass ein, vorzugsweise manuell betätigbarer oder vorzugsweise ein durch einen Antrieb betätigbarer, Schwenkantrieb für den Schwenkrahmen vorgesehen ist. Durch den Schwenkantrieb wird ein exaktes Drehen bzw. Verschwenken des am Schwenkrahmen befestigten Rotorblattlagers oder Bauteils ermöglicht, wobei das Rotorblattlager für die Montage an einer Rotornabe entsprechend positioniert bzw. ausgerichtet werden kann. Beispielsweise kann ein Schwenkantrieb zur Betätigung des Schwenkrahmens mittels eines Schneckengetriebes und einer am Schneckengetriebe angeordneten Handkurbel vorgesehen sein, wobei durch die Übertragung der Drehbewegung der Handkurbel mittels des Schneckengetriebes der Schwenkrahmen um die Schwenkachse verschwenkt wird. Dadurch, dass in einer Ausgestaltung ein mit einem Antrieb bzw. einem Motor versehener Schwenkantrieb vorgesehen ist, ist es möglich, das Schneckengetriebe bzw. Getriebe für die Schwenkbewegung maschinell zu betätigen. Hierdurch kann der Drehvorgang des Bauteils bzw. des Rotorblattlagers in der Handhabungsvorrichtung mechanisch, elektrisch, hydraulisch oder auch pneumatisch erfolgen.

Ferner ist in einer Ausgestaltung vorgesehen, dass eine Arretiereinrichtung für den Schwenkrahmen vorgesehen ist, so dass der Schwenkrahmen in wenigstens einer oder mehreren Schwenkpositionen arretierbar oder arretiert ist. Somit ist es möglich, dass der Schwenkrahmen in einer Aufnahmeposition verrastet ist, wobei in der Aufnahmeposition der Schwenkrahmen mit dem zu verschwenkenden Bauteil bzw. Rotorblattlager an den entsprechenden Befestigungspunkten bzw. an den Transportbohrungen des Bauteils verbunden bzw. verschraubt wird. Nach Anheben der Handhabungsvorrichtung bzw. des Traggestells mit dem daran befestigten Bauteil bzw. Rotorblattlager wird der Schwenkvorgang eingeleitet, wobei der Schwenkrahmen mit einem vorbestimmten Drehwinkel nach einer bestimmten Schwenkbewegung in einer Montageposition verrastet wird. Dadurch kann eine vorbestimmte Stellung des Bauteils eingenommen werden, wobei es möglich ist, dass das verschwenkte Bauteil für die Montage z.B. an einer Rotornabe mit einer vorbestimmten Neigung angeordnet ist, wobei in dieser Position der Schwenkrahmen entsprechend verrastet bzw. arretiert ist.

Weiterhin ist in einer bevorzugten Ausführungsform vorgesehen, dass der Schwenkrahmen in einer Aufnahmeposition zur Befestigung eines zu verschwenkenden, vorzugsweise horizontal ausgerichteten, Bauteils bzw. Rotorblattlagers am Schwenkrahmen und/oder der Schwenkrahmen in einer Montageposition zur Montage des verschwenkten Bauteils bzw. Rotorblattlagers arretierbar oder arretiert ist.

Durch die Arretiereinrichtung bzw. Rastvorrichtung(en) wird eine formschlüssige Sicherung der drehbaren Komponenten, z.B. des Schwenkrahmens der Handhabungsvorrichtung, beispielsweise durch einen Bolzen, erreicht, wodurch ein ungewolltes Drehen des befestigten Bauteils bzw. des Schwenkrahmens verhindert wird. Das großvolumige Bauteil bzw. das Rotorblattlager wird nach der Verschwenkung zusammen mit der Handhabungsvorrichtung zu dem Montageort transportiert, wobei beispielsweise das am Schwenkrahmen befestigte Rotorblattlager an einer Rotornabe durch Verschraubung angebracht wird. Anschließend kann die Handhabungsvorrichtung von dem Rotorblattlager gelöst werden, wodurch die Handhabungsvorrichtung für weitere Montagearbeiten zur Verfügung steht.

Darüber hinaus wird die Aufgabe gelöst durch eine Verwendung einer Handhabungsvorrichtung zur Handhabung von großvolumigen flachen Bauteilen einer Windenergieanlage, insbesondere von Rotorblattlagern und/oder Nabeneinbauten, bei der Montage der Bauteile, wobei die Höhe der Bauteile kleiner ist als ihre Breite oder Länge oder Durchmesser und wobei die Handhabungsvorrichtung wie voranstehend beschrieben ausgebildet ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können Einzelmerkmale oder eine Kombination mehrerer Merkmale erfüllen.

Nachfolgend wird die Erfindung anhand eines Ausführungsbeispiels ohne Beschränkung des allgemeinen Erfindungsgedankens exemplarisch beschrieben, wobei bezüglich aller im Text nicht näher erläuterten erfindungsgemäßen Einzelheiten ausdrücklich auf die Figuren verwiesen wird. Es zeigen:
- Fig. 1: schematisch eine perspektivische Darstellung einer Handhabungsvorrichtung mit einem daran angeordneten Rotorblattlager;
- Fig. 2: eine schematische Seitenansicht der Handhabungsvorrichtung aus Fig. 1;
- Fig. 3: die Handhabungsvorrichtung mit einem verschwenkten Rotorblattlager in einer schematischen Seitenansicht;
- Fig. 4: schematisch eine weitere Seitenansicht der in Fig. 3 dargestellten Handhabungsvorrichtung mit einem verschwenkten Rotorblattlager und
- Fig. 5a, 5b: schematisch jeweils perspektivische Darstellungen eines Schwenkantriebs für einen Schwenkrahmen aus verschiedenen Blickrichtungen und
- Fig. 6: schematisch eine weitere Ansicht des Schwenkabtriebs.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

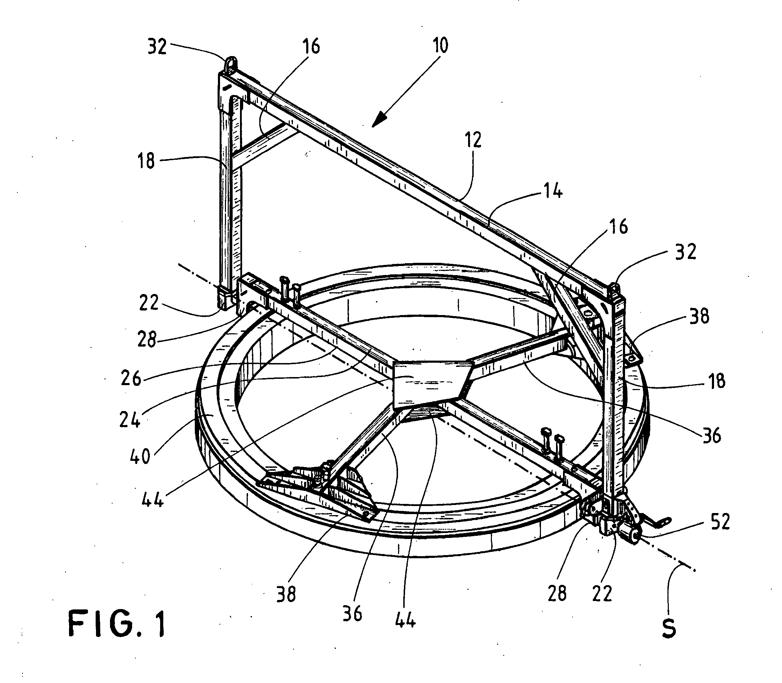

In Fig. 1 ist schematisch eine perspektivische Darstellung einer Hebevorrichtung 10 dargestellt, wobei die Hebevorrichtung 10 mit einem horizontal ausgerichteten Rotorblattlager 40 verbunden ist. Die Hebevorrichtung 10 verfügt über einen U-förmigen Tragrahmen 12, wobei die U-Form des Tragrahmens 12 umgekehrt angeordnet ist, so dass der Tragrahmen 12 nach unten offen ist.

Der Tragrahmen 12 verfügt über einen oberen, horizontal verlaufenden Querträger 14, an dessen Enden senkrecht ausgerichtete Längsträger 18 beidseits angeordnet sind. In den Randbereichen zwischen dem Querträger 14 und den Längsträgern 18 sind Querstreben 16 zur Versteifung des Tragrahmens 12 angeordnet.

An den unteren Enden der Längsträger 18 sind Drehlager 22 mit einem Gehäuse angeordnet, so dass ein zwischen den Längsträgern 18 angeordneter Schwenkrahmen 24 verschwenkbar angeordnet ist.

Der Schwenkrahmen 24 verfügt über einen Schwenkrahmenquerträger 26, an dessen Enden Schwenkrahmenlängsträger 28 senkrecht zum Schwenkrahmenquerträger 26 angeordnet sind.

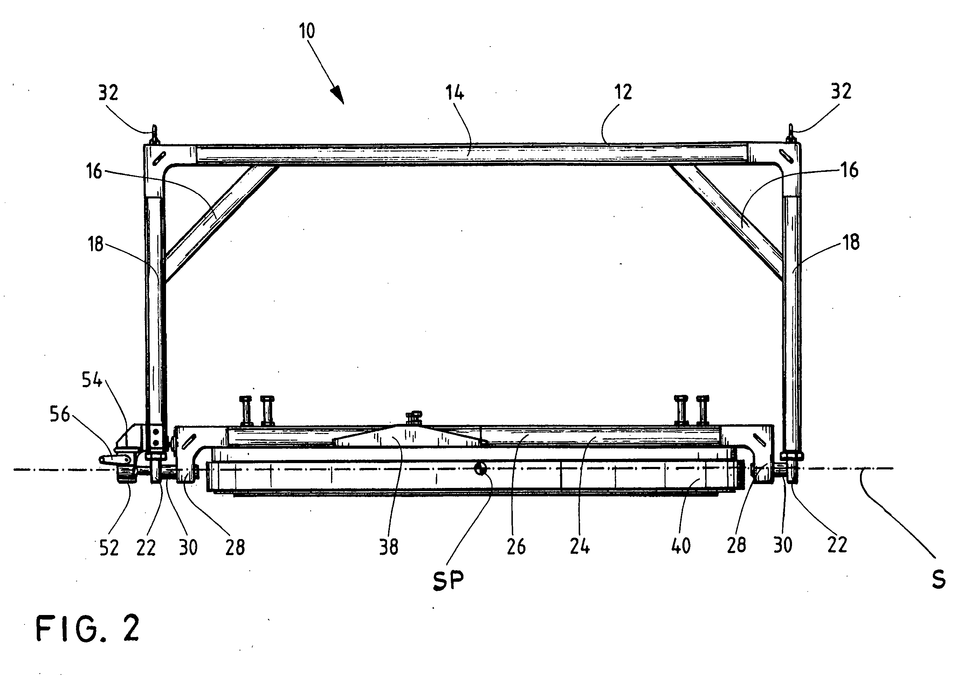

Der Schwenkrahmen 24 ist in der Aufnahmeposition des horizontal ausgerichteten bzw. liegenden Rotorblattlagers 40 nach Art eines umgekehrten U ausgerichtet (vgl. Fig. 2), wobei der Schwenkrahmen 24 gegenüber dem ihn umgebenden Tragrahmen 12 bewegbar bzw. verschwenkbar angeordnet ist.

Die äußeren Schwenkrahmenlängsträger 28 weisen an den dem Schwenkrahmenquerträger 26 abgewandten Enden nach außen gerichtete Drehzapfen 30 auf, die in den Drehlagern 22 des Tragrahmens 12 drehbar bzw. verschwenkbar gelagert sind.

In Fig. 2 ist eine Seitenansicht der in Fig. 1 dargestellten Handhabungsvorrichtung 10 mit dem am Schwenkrahmen 24 befestigten Rotorblattlager 40 dargestellt. Aus Fig. 2 ist ersichtlich, dass die Drehzapfen 30 parallel versetzt zu dem Schwenkrahmenquerträger 26 ausgerichtet sind und in die Drehlager 22, die am unteren Ende der Längsträger 18 angeordnet sind, eingreifen. An der Oberseite der Längsträger 18 des Tragrahmens 12 sind Verbindungslaschen 32 angeordnet, so dass mittels von an den Verbindungslaschen 32 befestigten Seilen oder Ketten der Tragrahmen 12 mit einem Hebezeug oder einem Kran oder dergleichen verbunden wird. Hierbei sind die Anschlagpunkte im Bereich der Verbindungslaschen 32 ausgebildet.

Seitlich an dem Schwenkrahmenquerträger 26 ist zu beiden Seiten jeweils ein Tragarm 36 angeordnet, die mit dem Schwenkrahmenquerträger 26 verbunden sind. Am Ende der Tragarme 36 sind dreieckförmige Befestigungskörper 38 angeordnet, die mit Bohrungen versehen sind, so dass durch Einbringen von Schrauben in die Bohrungen des Befestigungskörpers 38 die Handhabungsvorrichtung 10 mit den Transportbohrungen des Rotorblattlagers 40 verschraubt wird.

Zur Verstärkung bzw. Versteifung ist im Verbindungsbereich der Tragarme 36 mit dem Schwenkrahmenquerträger 26 an der Ober- und Unterseite eine trapezförmige Fixierungsplatte 44 angeordnet, wobei die Eckpunkte der Fixierungsplatten 44 auf die Mittellinien der Profile des Schwenkrahmenquerträgers 26 und der Tragarme 36 ausgerichtet sind.

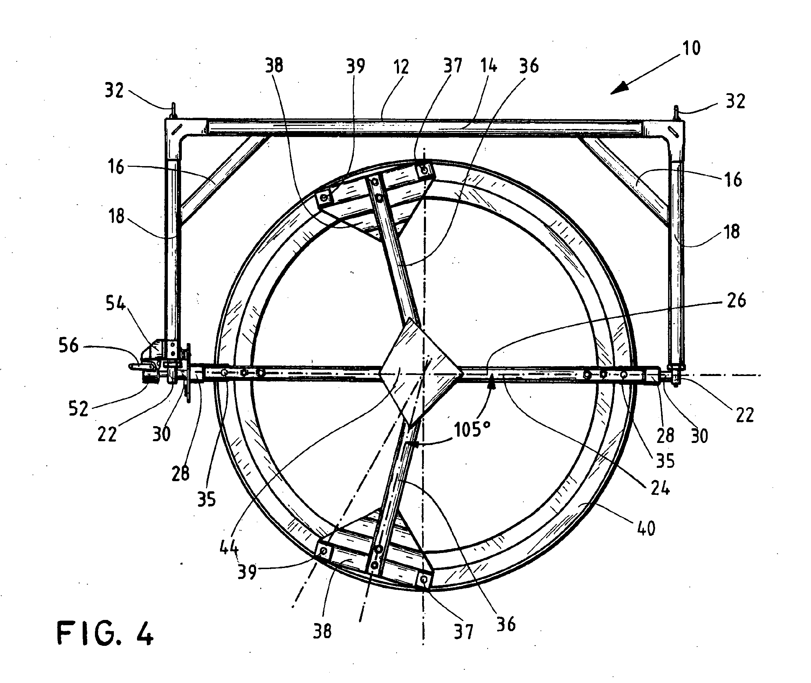

Wie in Fig. 4 erkennbar ist, ermöglicht die Geometrie der Vorrichtung eine Befestigung von Bauteilen mit drei Befestigungsschrauben (Befestigungsbohrungen 35 und 39) oder mit vier Befestigungsschrauben (Befestigungsbohrungen 35 und 37), welche bevorzugt gleichmäßig über den Umfang verteilt sind. Hierzu sind die Tragarme 36 vorteilhaft in einem Winkel zwischen 100° und 110°, insbesondere 105°, zum Schwenkrahmenträger 26 angeordnet. Die Bohrungen sind so ausgeführt, dass sowohl eine Montage mit M24 oder M30 Schrauben erfolgen kann. Ebenso kann die Vorrichtung vorteilhafterweise so ausgeführt sein, dass verschiedene Lochkreisdurchmesser abgedeckt werden.

Die Drehlager 22 sind vorteilhafterweise als Gleitlager ausgebildet, so dass die Drehzapfen 30 darin drehbar bzw. schwenkbar gelagert sind. In den Figuren 1 und 2 ist die Schwenkachse des Schwenkrahmens 24 strichpunktiert eingezeichnet und mit dem Bezugszeichen S versehen. Wie aus Fig. 2 zu ersehen ist, verläuft die Schwenkachse S nach Befestigung des Rotorblattlagers 40 durch das daran befestigte Rotorblattlager 40, wobei vorteilhafterweise der Schwerpunkt SP des Rotorblattlagers 40 innerhalb der Schwenkachse S angeordnet ist (vgl. Fig. 2).

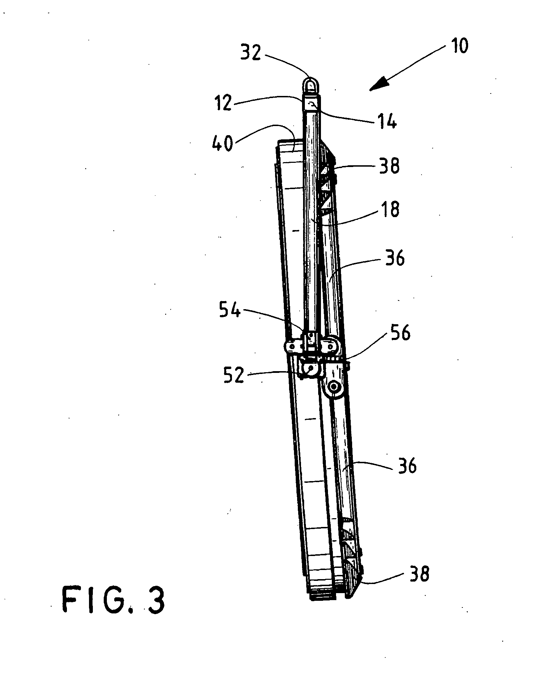

Zur Ausführung einer Verschwenkbewegung ist auf einer Seite des Schwenkrahmens 26 an einem Längsträger 18 des Tragrahmens 12 ein Schneckengetriebe 52 über eine am Längsträger 18 angeordnete Aufnahme 54 befestigt. Das Schneckengetriebe 52 wird mittels einer Handkurbel 56 in Bewegung versetzt, wobei das Schneckengetriebe 52 mit einem Drehzapfen 30 verbunden ist. Durch Drehung der Drehkurbel 56 wird über das damit angetriebene Schneckengetriebe der Schwenkrahmen 24 nach einem Anhebevorgang der Handhabungsvorrichtung 10 mit dem daran angeordneten bzw. befestigten Rotorblattlager 40 gedreht bzw. verschwenkt. Hierbei wird das in den Figuren 1 und 2 dargestellte horizontal ausgerichtete Rotorblattlager 40 in eine aufrechte Montageposition gebracht, wie sie in den Figuren 3 und 4 in zwei verschiedenen Ansichten dargestellt ist.

Wie aus Fig. 3 zu erkennen ist, wird das Rotorblattlager 40 in eine montagebedingte geneigte Position mit einem vorbestimmten Neigungswinkel zur Vertikalen gebracht bzw. ausgerichtet, so dass das Rotorblattlager 40 montagebereit zu einem Blattflansch einer Rotornabe ausgerichtet ist und nach Annäherung des gehaltenen Rotorblattlagers 40 an den Blattflansch der Rotornabe das Rotorblattlager 40 auf dem Blattflansch montiert wird.

Anstelle des Schneckengetriebes 52 bzw. der Handkurbel 56 kann auch ein anderer Antrieb vorgesehen sein, um eine Verschwenkbewegung des Schwenkrahmens 24 gegenüber dem Tragrahmen 12 auszuführen.

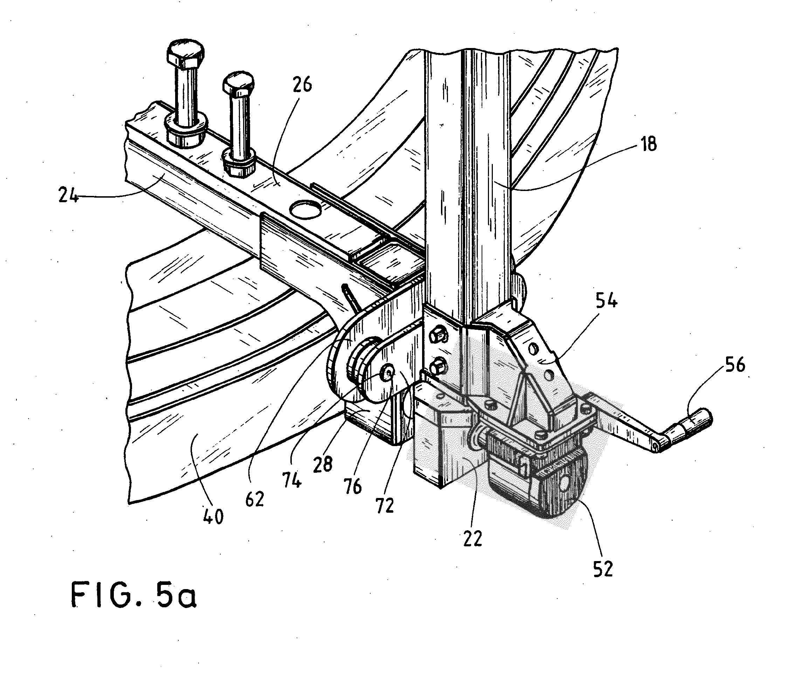

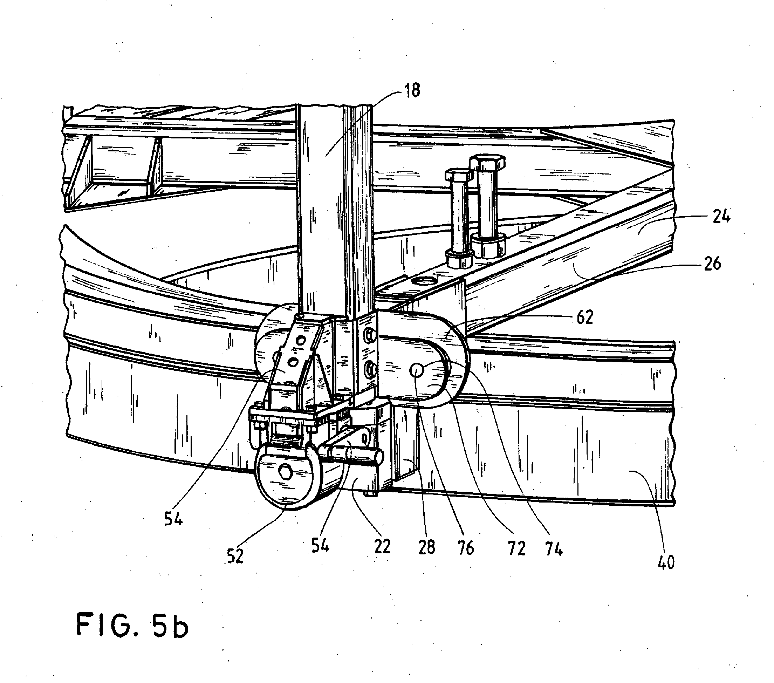

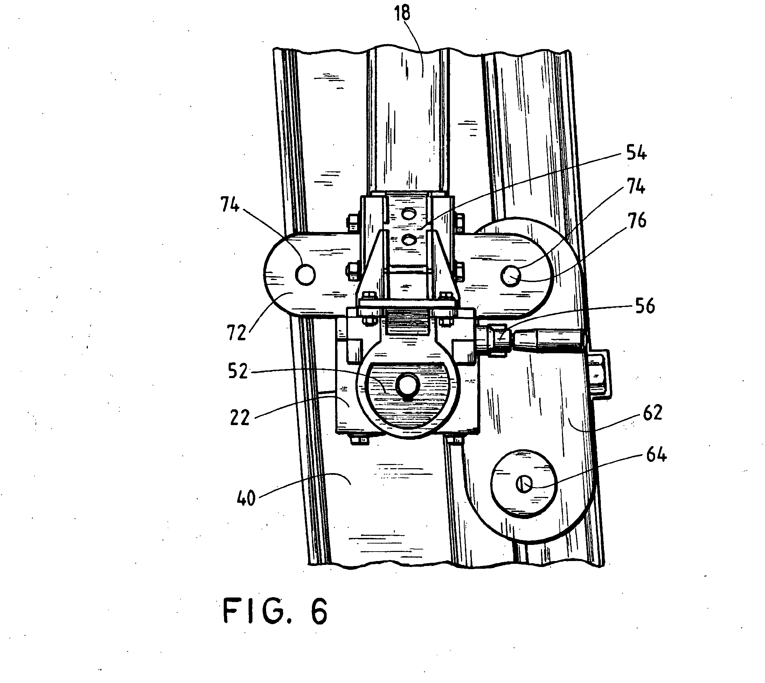

In den Figuren 5a, 5b sind schematisch verschiedene perspektivische Darstellungen des Verbindungsbereiches zwischen dem Schwenkrahmen 24 und dem Tragrahmen 12 mit seinem Längsträger 18 und des daran angeordneten Schneckengetriebes 52 aus verschiedenen Ansichten dargestellt. Im oberen Bereich bzw. im Verbindungsbereich des Schwenkrahmenlängsträgers 28 mit dem Schwenkrahmenquerträger 26 ist ein oval ausgebildetes Blechteil 62 angeordnet bzw. angeschweißt oder dergleichen. Das Blechteil 62 weist auf seinen beiden freien Seiten Bohrungen 64 auf (vgl. Fig. 6).

Dem Blechteil 62 des Schwenkrahmens 24 gegenüber ist am Längsträger 18 ein entsprechend langgestrecktes Blechteil 72 im unteren Bereich des Längsträgers 18 angeordnet, das über entsprechende Bohrungen 74 verfügt, die mit den Bohrungen 64 des Blechteils 62 am Schwenkrahmen 24 bei paralleler Ausrichtung der Blechteile 62, 72 miteinander fluchten, so dass die Bohrungen von Sperrbolzen 76 durchsetzt werden, wodurch der Schwenkrahmen arretiert ist.

Die Figuren 5a und 5b zeigen die parallel zueinander ausgerichteten Blechteile 72, 62 in einer Aufnahmeposition eines liegenden bzw. horizontal ausgerichteten Rotorblattlagers 40. Um den arretierten bzw. verrasteten Schwenkrahmen 24 zu drehen, werden die Sperrbolzen 76 herausgezogen und anschließend durch Betätigung des Schneckengetriebes 52 der Schwenkrahmen 24 mit dem Rotorblattlager 40 gedreht.

Durch Verschwenkung des Schwenkrahmens 24 wird das Blechteil 62 ebenfalls verschwenkt, so dass in einer geneigten Position des Rotorblattlagers 40, wie sie in Fig. 6 in einem Ausschnitt schematisch dargestellt ist, die Bohrung 74 des Blechteils 72 mit einer anderen Bohrung des Blechteils 62 fluchtet, so dass in dieser Position die beiden fluchtenden Bohrungen der Blechteile 62, 72 von einem Sperrbolzen 76 durchsetzt werden, so dass in dieser Position der Schwenkrahmen 24, vorzugsweise während der Montage des Rotorblattlagers 40 an einen Blattflansch einer Rotornabe, arretiert ist.

Die Figuren 5a, 5b zeigen die arretierte Stellung des Schwenkrahmens 24 in der Aufnahmeposition des Rotorblattlagers 40, während in Fig. 6 die arretierte Montageposition des Rotorblattlagers 40 gezeigt ist.

Durch die Verwendung von Sperrbolzen oder dergleichen wird eine formschlüssige Sicherung der drehbaren Komponenten der Handhabungsvorrichtung 10 gegen ein ungewolltes Verschwenken bzw. Drehen in der Montageposition verhindert.

Durch die erfindungsgemäße Handhabungsvorrichtung wird das Heben und Drehen von Rotorblattlagern sowie die Montage von Rotorblattlagern an Rotornaben erleichtert, wodurch die Arbeitssicherheit erhöht wird. Darüber hinaus wird die Montage von Rotorblattlagern an Rotornaben verbessert, wobei außerdem die mechanischen Belastungen auf ein Rotorblattlager während der Montage herabgesetzt werden.

### Bezugszeichenliste

- 10: Handhabungsvorrichtung
- 12: Tragrahmen
- 14: Querträger
- 16: Querstrebe
- 18: Längsträger
- 22: Drehlager
- 24: Schwenkrahmen
- 26: Schwenkrahmenquerträger
- 28: Schwenkrahmenlängsträger
- 30: Drehzapfen
- 32: Verbindungslasche
- 35: Befestigungsbohrung
- 36: Tragarm
- 37: Befestigungsbohrung
- 38: Befestigungskörper
- 39: Befestigungsbohrung
- 40: Rotorblattlager
- 44: Fixierungsplatte
- 52: Schneckengetriebe
- 54: Aufnahme
- 56: Handkurbel
- 62: Blechteil
- 64: Bohrung
- 72: Blechteil
- 74: Bohrung
- 76: Sperrbolzen
- S: Schwenkachse
- SP: Schwerpunkt

## Patentansprüche

1. Handhabungsvorrichtung (10) für flache Bauteile (40) einer Windenergieanlage, insbesondere für Rotorblattlager (40) und/oder Nabeneinbauten, wobei die Höhe der Bauteile (40) kleiner ist als ihre Breite oder Länge oder Durchmesser, wobei die Handhabungsvorrichtung (10) einen, vorzugsweise starren, Tragrahmen (12) aufweist und an dem Tragrahmen (12) ein um eine Schwenkachse (S) verschwenkbarer Schwenkrahmen (24) vorgesehen ist, wobei der Schwenkrahmen (24) mit dem Bauteil (40), vorzugsweise Rotorblattlager (40), verbindbar oder verbunden ist, wobei der Schwenkrahmen (24) einen zwischen den Längsseiten des Tragrahmens (12) angeordneten Querträger (26) aufweist und am Querträger (26) des Schwenkrahmens (24) seitlich wenigstens ein oder mehrere Haltearme (36) vorgesehen sind, wobei der Schwenkrahmen (24) und/oder die Haltearme (36) mit Befestigungsvorrichtungen (38) für zu verschwenkende oder verschwenkte Bauteile versehen sind.

2. Handhabungsvorrichtung (10) nach Anspruch 1, **dadurch gekennzeichnet, dass** der Tragrahmen (12) eine, vorzugsweise umgekehrte, U-Form oder Bügelform aufweist.

3. Handhabungsvorrichtung (10) nach Anspruch 1 oder 2, **dadurch gekennzeichnet, dass** der Tragrahmen (12), vorzugsweise auf seiner Oberseite, wenigstens eine oder mehrere Befestigungsvorrichtungen für Anschlagmittel, vorzugsweise für Anschlagmittel eines Krans oder eines Hebezeugs, aufweist.

4. Handhabungsvorrichtung (10) nach einem der Ansprüche 1 bis 3, **dadurch gekennzeichnet, dass** an den, vorzugsweise senkrechten, Längsseiten des Tragrahmens (12) der Schwenkrahmen (24), vorzugsweise im unteren Bereich des Tragrahmens (12), schwenkbar gelagert ist.

5. Handhabungsvorrichtung (10) nach einem der Ansprüche 1 bis 4, **dadurch gekennzeichnet, dass** der Schwenkrahmen (24) eine U-Form oder Bügelform aufweist.

6. Handhabungsvorrichtung (10) nach einem der Ansprüche 1 bis 5, **dadurch gekennzeichnet, dass** die Befestigungsvorrichtungen in den Randbereichen des Schwenkrahmens (24), insbesondere in den Randbereichen des Querträgers (14) des Schwenkrahmens (24), und/oder in den Randbereichen der Haltearme (36) vorgesehen sind.

7. Handhabungsvorrichtung (10) nach einem der Ansprüche 1 bis 6, **dadurch gekennzeichnet, dass** ein zu verschwenkendes oder verschwenktes Bauteil (40) mittels drei oder vier Befestigungsschrauben an der Handhabungsvorrichtung (10), insbesondere am Schwenkrahmen (24) und/oder an den Haltearmen (36), befestigbar oder befestigt ist, wobei insbesondere die Befestigungsschrauben gleichmäßig, vorzugsweise über den Umfang des zu verschwenkenden oder verschwenkten Bauteils (40), verteilt angeordnet sind.

8. Handhabungsvorrichtung (10) nach einem der Ansprüche 1 bis 7, **dadurch gekennzeichnet, dass** der Schwenkrahmen (24) und/oder die Haltearme (36) Aufnahmen für verschiede-ne Durchmesser von Befestigungsschrauben für ein zu verschwenkendes oder verschwenktes Bauteil (40) aufweisen.

9. Handhabungsvorrichtung (10) nach einem der Ansprüche 1 bis 8, **dadurch gekennzeichnet, dass** die Befestigungsschrauben zur Befestigung von Bauteilen (40), vorzugsweise von Bauteilen (40) mit verschiedenen Durchmessern, am Schwenkrahmen (24) und/oder an den Haltearmen (36) der Handhabungsvorrichtung (10) jeweils auf unterschiedlichen Lochkreisdurchmessern anordbar oder angeordnet sind.

10. Handhabungsvorrichtung (10) nach einem der Ansprüche 1 bis 9, **dadurch gekennzeichnet, dass** ein, vorzugsweise manuell betätigbarer oder ein vorzugsweise durch einen Antrieb betätigbarer, Schwenkantrieb für den Schwenkrahmen (24) vorgesehen ist.

11. Handhabungsvorrichtung (10) nach einem der Ansprüche 1 bis 10, **dadurch gekennzeichnet, dass** eine Arretiereinrichtung für den Schwenkrahmen (24) vorgesehen ist, so dass der Schwenkrahmen (24) in wenigstens einer oder mehreren Schwenkpositionen arretierbar oder arretiert ist.

12. Handhabungsvorrichtung (10) nach Anspruch 11, **dadurch gekennzeichnet, dass** der Schwenkrahmen (24) in einer Aufnahmeposition zur Befestigung eines zu verschwenkenden, vorzugsweise horizontal ausgerichteten, Bauteils (40) am Schwenkrahmen (24) und/oder der Schwenkrahmen (24) in einer Montageposition zur Montage des verschwenkten Bauteils (40) arretierbar oder arretiert ist.

13. Verwendung einer Handhabungsvorrichtung (10) zur Handhabung von flachen Bauteilen (40) einer Windenergieanlage, insbesondere von Rotorblattlagern (40) und/oder Nabeneinbauten, bei der Montage der Bauteile (40), wobei die Höhe der Bauteile (40) kleiner ist als ihre Breite oder Länge oder Durchmesser, wobei die Handhabungsvorrichtung (10) nach einem der Ansprüche 1 bis 12 ausgebildet ist.

## Claims

1. A handling device (10) for flat components (40) of a wind turbine, particularly for rotor blade bearings (40) and/or hub installations, wherein the height of the components (40) is smaller than their breadth or length or diameter, wherein the handling device (10) includes a, preferably rigid, support frame (12) and provided on the support frame (12) there is a pivoting frame (24), which is pivotable about a pivotal axis (S), wherein the pivoting frame (24) is connectable or connected to the component (40), preferably the rotor blade bearing (40), wherein the pivoting frame (24) includes a crossbeam (26) arranged between the longitudinal sides of the support frame (12) and one or more support arms (36) are provided laterally on the crossbeam (26) of the pivoting frame (24), wherein the pivoting frame (24) and/or the support arms (36) are provided with fastening devices (38) for components which have been pivoted or are to be pivoted.

2. A handling device (10) as claimed in Claim 1, **characterised in that** the support frame (12) has a, preferably inverted, U shape or stirrup shape.

3. A handling device (10) as claimed in Claim 1 or 2, **characterised in that** the support frame (12) includes, preferably on its upper surface, one or more fastening devices for lifting means, preferably for lifting means of a crane or a hoist.

4. A handling device (10) as claimed in one of Claims 1 to 3, **characterised in that** the pivoting frame (24) is pivotally mounted on the, preferably perpendicular, longitudinal sides of the support frame (12), preferably in the lower region of the support frame (12).

5. A handling device (10) as claimed in one of Claims 1 to 4, **characterised in that** the pivoting frame (24) has a U shape or stirrup shape.

6. A handling device (10) as claimed in one of Claims 1 to 5, **characterised in that** the fastening devices are provided in the edge regions of the pivoting frame (24), particularly in the edge regions of the crossbeam (14) of the pivoting frame (24), and/or in the edge regions of the support arms (36).

7. A handling device (10) as claimed in one of Claims 1 to 6, **characterised in that** a component (40), which has been pivoted or is to be pivoted, is fastenable or fastened to the handling device (10), particularly to the pivoting frame (24) and/or to the support arms (36), by means of three or four fastening screws, wherein, in particular, the fastening screws are arranged distributed uniformly, preferably over the periphery of the component (40) which has been pivoted or is to be pivoted.

8. A handling device (10) as claimed in one of Claims 1 to 7, **characterised in that** the pivoting frame (24) and/or the support arms (36) have openings for different diameters of fastening screws for a component (40), which has been pivoted or is to be pivoted.

9. A handling device (10) as claimed in one of Claims 1 to 8, **characterised in that** the fastening screws for fastening components (40), preferably components (40) with different diameters, are arrangeable or arranged on the pivoting frame (24) and/or on the support arms (36) of the handling device (10) at different hole circle diameters.

10. A handling device (10) as claimed in one of Claims 1 to 9, **characterised in that** a, preferably manually actuable, pivoting drive or a pivoting drive, which is preferably actuable by an actuator, is provided for the pivoting frame (24).

11. A handling device (10) as claimed in one of Claims 1 to 10, **characterised in that** a locking device for the pivoting frame (24) is provided so that the pivoting frame (24) is lockable or locked in at least one or more pivotal positions.

12. A handling device (10) as claimed in Claim 11, **characterised in that** the pivoting frame (24) is lockable or locked in a receiving position for fastening a component (40), which is preferably horizontally aligned, to be pivoted to the pivoting frame (24) and/or the pivoting frame (24) is lockable or locked in an installation position for installing the pivoted component (40).

13. Use of a handling device (10) for handling flat components of a wind turbine, particularly rotor blade bearings (40) and/or hub installations, in the installation of the components (40), wherein the height of the components (40) is smaller than their breadth or length or diameter, wherein the handling device (40) is constructed as claimed in one of Claims 1 to 12.

## Revendications

1. Dispositif de manipulation (10) pour les composants plats (40) d'une éolienne, en particulier pour les paliers de pales de rotor (40) et / ou un moyeu intégré, dans lequel la taille des composants (40) est plus petite que sa largeur ou que sa longueur ou que son diamètre, dans lequel le dispositif de manipulation (10) comprend un châssis de support (12), de préférence rigide, et un cadre (24) pivotant autour d'un axe de pivotement (S) sur le châssis de support (12), dans lequel le châssis pivotant (24) peut être connecté ou est relié au composant (40), de préférence au palier de pale de rotor (40), ledit châssis pivotant (24) comprenant une traverse (26) disposée entre les côtés longitudinaux du châssis de support (12), un ou plusieurs bras de maintien (36) étant prévus sur le côté latéral de la traverse (26) du châssis pivotant (24), le châssis pivotant (24) et / ou les bras de maintien (36) étant pourvus de dispositifs de fixation (38) pour fixer les composants à faire pivoter ou pivotants.

2. Dispositif de manipulation (10) selon la revendication 1, **caractérisé en ce que** le châssis de support (12) est en forme de U ou d'étrier, de préférence inversé.

3. Dispositif de manipulation (10) selon la revendication 1 ou la revendication 2, **caractérisé en ce que** le châssis de support (12), de préférence sur son côté supérieur, comprend un ou plusieurs dispositifs de fixation pour des moyens d'arrêt, de préférence des moyens d'arrêt tels qu'une grue ou qu'un dispositif de levage.

4. Dispositif de manipulation (10) selon l'une quelconque des revendications 1 à 3, **caractérisé en ce que** le châssis pivotant (24) est monté de manière pivotante sur les côtés longitudinaux, de préférence verticaux, du châssis de support (12), de préférence dans la zone inférieure du châssis de support (12).

5. Dispositif de manipulation (10) selon l'une quelconque des revendications 1 à 4, **caractérisé en ce que** le châssis pivotant (24) est en forme de U ou en forme d'étrier.

6. Dispositif de manipulation (10) selon l'une quelconque des revendications 1 à 5, **caractérisé en ce que** des dispositifs de fixation sont prévus dans les zones périphériques du châssis pivotant (24), en particulier dans les zones périphériques de l'élément transversal (14) du châssis pivotant (24), et / ou dans les zones périphériques des bras de maintien (36).

7. Dispositif de manipulation (10) selon l'une quelconque des revendications 1 à 6, **caractérisé en ce qu'**un composant à faire pivoter ou pivotant (40) est fixé ou peut être fixé au moyen de trois ou quatre vis de fixation sur le dispositif de manipulation (10), en particulier sur le châssis pivotant (24) et / ou sur les bras de maintien (36), les vis de fixation étant en particulier disposées de manière uniforme, de préférence réparties sur la circonférence du composant (40) à faire pivoter ou pivotant.

8. Dispositif de manipulation (10) selon l'une des revendications 1 à 7, **caractérisé en ce que** le châssis pivotant (24) et / ou les bras de maintien (36) comprennent des logements pour différents diamètres de vis de fixation pour un composant à faire pivoter ou pivotant (40).

9. Dispositif de manipulation (10) selon l'une quelconque des revendications 1 à 8, **caractérisé en ce que** les vis de fixation pour les composants de montage (40), de préférence des composants (40) de diamètres différents, peuvent être disposées ou sont disposées sur le châssis pivotant (24) et / ou sur les bras de retenue (36) du dispositif de manipulation (10), sur chacun des diamètres des trous.

10. Dispositif de manipulation (10) selon l'une quelconque des revendications 1 à 9, **caractérisé en ce qu'**un dispositif d'entraînement rotatif, de préférence actionné manuellement ou de préférence actionné par un mécanisme d'entraînement, est prévu pour le châssis pivotant (24).

11. Dispositif de manipulation (10) selon l'une quelconque des revendications 1 à 10, **caractérisé en ce qu'**un dispositif de blocage pour le châssis pivotant (24) est prévu, de sorte que le châssis pivotant (24) peut être bloqué ou verrouillé dans au moins une position ou une pluralité de positions de pivotement.

12. Dispositif de manipulation (10) selon la revendication 11, **caractérisé en ce que** le châssis pivotant (24) est apte à être bloqué ou arrêté dans une position de réception, de préférence horizontale, pour la fixation d'un composant (40) sur le châssis pivotant (24) et / ou le châssis pivotant (24) est apte à être bloqué ou arrêté dans une position de montage pour le montage du composant pivotant (40).

13. Utilisation d'un dispositif de manipulation (10) pour la manipulation de composants plats (40) d'une éolienne, en particulier des paliers de pales de rotor (40) et / ou un moyeu intégré, lors du montage des composants (40), la hauteur des éléments (40) étant plus petite que la largeur ou que la longueur ou que le diamètre du composant, dans laquelle le dispositif de manipulation (10) est réalisé selon l'une des revendications 1 à 12.
